# EUROPÄISCHE PATENTSCHRIFT

(11) **EP 0 589 277 B1**
(45) Veröffentlichungstag und Bekanntmachung des Hinweises auf die Patenterteilung: **05.01.2000**
(21) Anmeldenummer: 93114289.7
(22) Anmeldetag: 06.09.1993
(51) Int. Cl.: C07F 9/09, C10M 137/04

(54) **Phosphorylierung von Epoxiden**
Phosphorylation of epoxides
Phosphorylation d'époxydes

(30) Priorität: 17.09.1992 DE 4231073
(43) Veröffentlichungstag der Anmeldung: 30.03.1994
(73) Patentinhaber: RHEIN CHEMIE RHEINAU GmbH, 68204 Mannheim (DE)
(72) Erfinder: Schäfer, Volker, Dr., D-67122 Altrip (DE); Kohler, Robert, D-68794 Oberhausen (DE); Schilling, Günter, D-68723 Schwetzingen (DE); Pauli, Alfred, Dr., D-69207 Sandhausen (DE); Röhrs, Ingo, D-64668 Rimbach (DE); Korff, Joachim, Dr., D-68766 Hockenheim (DE)
(74) Vertreter: Feldhues, Michael L.F., Dr.

(56) Entgegenhaltungen:
- EP-A- 0 133 030
- CH-A- 388 935
- DE-A- 3 208 748
- GB-A- 861 778
- US-A- 2 490 748
- US-A- 3 215 715
- US-A- 4 101 432

## Beschreibung

Phosphorsäure sowie deren Mono- und Diester reagieren mit Epoxiden unter Bildung von Phosphorsäurehydroxiester. Folgende Reaktionen sind möglich:

Nach Gleichung 1 reagieren Phosphorsäure und deren Ester 1 mit dem Epoxid 2 zu einem Phosphorsäurehydroxiesterderivat 3. 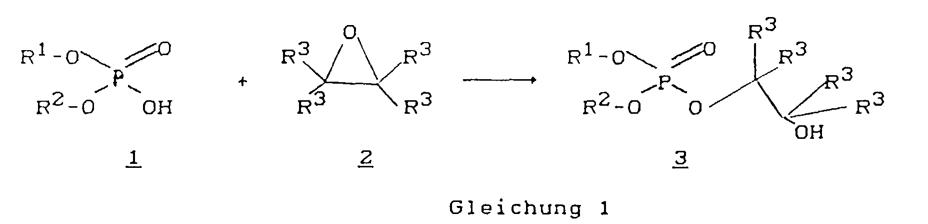
R¹ = Alkyl, Aryl, H
R² = Alkyl, Aryl, H
R³ = organischer Rest

Schema 1 beschreibt die Addition von Phosphorsäure und von deren Ester an epoxidierte Fettsäureglyceride. Wie das Reaktionsschema zeigt, können hierbei durch die Phosphorylierungsreaktion auch oligomerisierte Triglyceride entstehen.

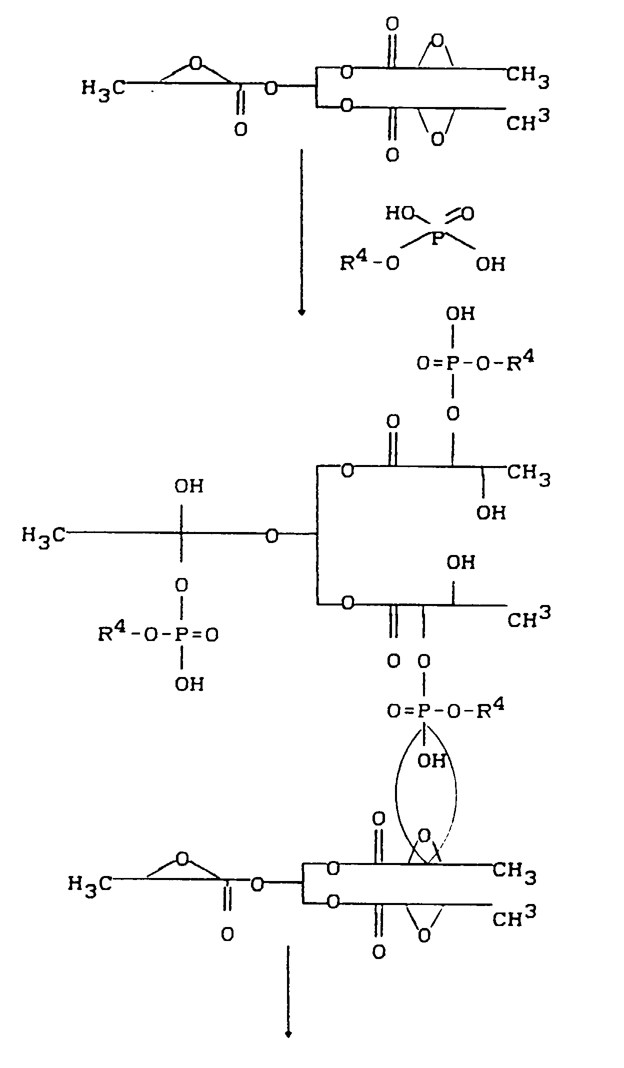

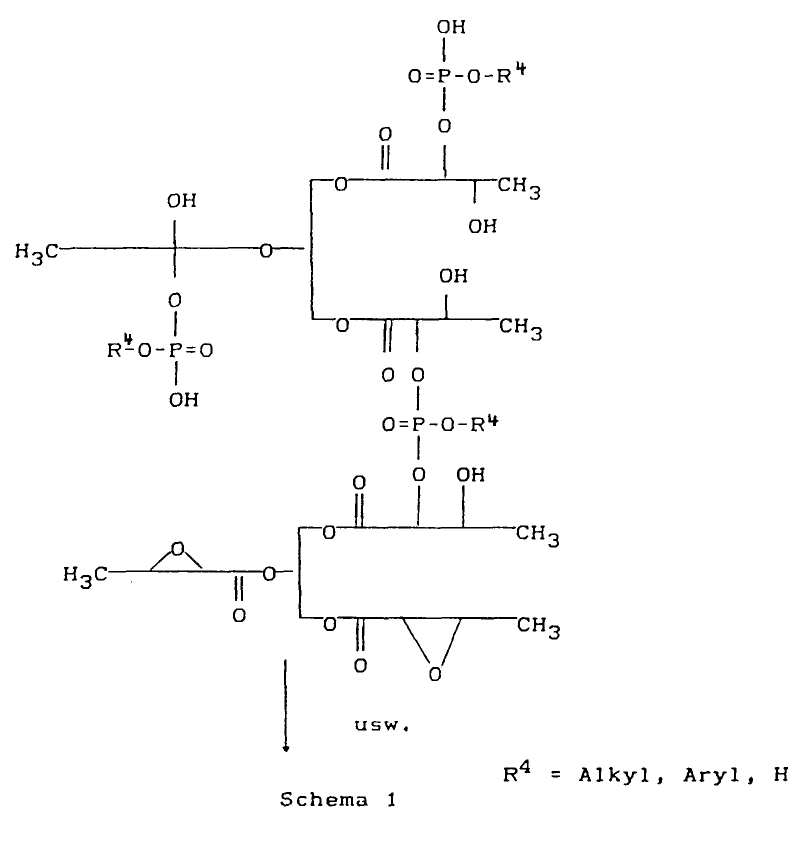

Tertiäre Ester der Orthophosphorsäure mit Alkoholen oder Phenolen werden als Weichmacher, feuerresistente hydraulische Flüssigkeiten und Kompressorenöle, Öl- und Treibstoffadditive eingesetzt. Je nach Art der alkoholischen Reste unterscheidet man Triaryl-, Trialkyl- oder Alkylarylphosphate. Von technischer Bedeutung ist die Umsetzung von Alkoholen mit den Säurechloriden der Phosphorsäure.

In der deutschen Offenlegungsschrift 3 208 748 werden Reaktionsprodukte von Epoxiden ungesättiger Fettsäuren mit Phosphorsäure und ein Verfahren zu ihrer Herstellung beschrieben. Die Produkte werden als Metallbearbeitungshilfsmittel, als Korrosionsschutzmittel und als Konservierungsmittel venvendet.

Ein Verfahren zur Herstellung von oberflächenaktiven Stoffen wird in der schweizerischen Patentschrift 388 935 beschrieben. Mehrwertige anorganische Säuren werden mit Epoxydierungsprodukten höhermolekularer ungesättigter Verbindungen umgesetzt.

Aus EP-A 133030 sind wasserlösliche Kühlmittel bekannt, die aus einer wäßrigen Lösung mit 0,1 bis 20 Gew.-% einer Phosphorverbindung bestehen. Die Phosphorverbindung wird durch Veresterung eines Epoxidproduktes einer ungesättigten Fettsäure mit Phosphorsäure hergestellt.

In der US-Patentschrift 2 490 748 wird ein Verfahren zur Herstellung eines Esters der Phosphorsäure beschrieben. Eine ungesättigte Säure wird mit Luft oder Sauerstoff umgesetzt, und anschließend wird das so erhaltene Produkt mit Phosphorsäure behandelt. Die Endprodukte werden als oberflächenaktive Mittel insbesondere in der Textilindustrie eingesetzt.

Aus US-A 3 215 715 sind organische, Metall enthaltende Phosphatkomplexe bekannt. Polyvalente Metallsalze von Phosphorsäureestern werden mit organischen Epoxiden umgesetzt. Die Produkte werden zur Korrosionsinhibierung von Metalloberflächen verwendet.

Es wurde nun gefunden, daß die Umsetzungsprodukte aus Mono- und Diester der Phosphorsäure mit Epoxiden, inshesondere epoxidierten Fettsäuren und Fettsäurederivaten, als Schmierstoff-Additive eingesetzt werden können.

Gegenstand der Erfindung ist ein Verfahren zur Phosphorylierung epoxidierter Fettsäuren, wie z.B. Ölsäuren, Linolsäuren, Erucasäuren und Fettsäurederivaten wie Fettsäureester, z.B. Rüböl, Sojaöl, Ölsäuremethylesters, das dadurch gekennzeichnet ist, daß man eine epoxidierte Fettsäure oder ein Derivat, das einen Epoxidgehalt von 1,5-15 Gew.-%, vorzugsweise 4- 8 Gew.-%, aufweist, bei 0-120°C, bevorzugt 20-80°C, besonders bevorzugt bei etwa 40°C, mit Mono- und/oder Diestern der Phosphorsäure mit geradkettigen oder verzweigten Alkylgruppen einer Kettenlänge von 4 bis 10 Kohlenstoffatomen oder mit Arylgruppen umsetzt. Die Menge der Phosphorsäure oder deren Esters wird so bemessen, daß auf eine Epoxidgruppe etwa eine etwa äquivalente Menge Phosphorsäure kommt.

Epoxidierte Fettsäuren und Fettsäurederivate z.B. Fettsäureester sind insbesondere Epoxidierungsprodukte von Fettsäureglyceriden bzw. deren Alkylester (insbesondere Methylester) wie z.B. Rüböl, Sojaöl, Lardöl etc. Mit einem Epoxidgehalt von 3-10 Gew.-%. Sie können einzeln oder als Mischungen verwendet werden. Beispiele für solche Mischungen sind epoxidiertes Rüböl/epoxidierter Rübölsäuremethylester, epoxidiertes Sojaöl/epoxidierter Rübölsäuremethylester.

Man kann auch epoxidierte Fettsäureester gemeinsam mit epoxidierten Kohlenwasserstoffen (geradkettig oder verzweigt) oder mit epoxidierten Etherverbindungen mit bevorzugt 6-10 Kohlenstoffatomen phosphorylieren. Ein Beispiel hierfür ist 1-(2-Ethyl-hexyloxy)-2,3-epoxipropan/epoxidiertes Sojaöl.

Die erfindungsgemäßen phosphorylierten Fettsäureester wirken z.B. in Mineralölen, Syntheseölen, Schmierfetten und nativen Ölen als Hochdruck-Additive (EP-Additive) und Verschleiß-Additive (AW-Additive). Solche Additive können mit Eisen aus den geschmierten Maschinenteilen Eisenphosphorverbindungen bilden die den Verschleiß dieser Teile (z.B. Rollenlager, Zahnradgrenzen, Werkzeuge) wesentlich vermindern, wodurch die Nutzungsdauer verlängert wird. Zudem wird das Verschweißen vor allem rotierender Maschinenteile verhindert. Darüber hinaus wirken die phosphorylierten Fettsäureester auch als Korrosionsinhibitoren und als Antioxydantien. Beispielsweise kann auch bei der spannabhebenden Bearbeitung von Metallen ein besseres Arbeitsergebnis erzielt werden.

Die phosphorylierten Fettsäureester können z.B. als 0,1 bis 1,5 gew.-%ige Lösungen bevorzugt 0,2 bis 1 gew.-%ige Lösungen in Basisölen angewendet werden. Mit 0,3 bis 1 gew.-%igen Lösungen in Basisölen können im Vierkugelapparat Kalottendurchmesser von 0,3 - 0,4 mm* bzw. in der Zahnrad-Verspannungs-Prüfmaschine eine Schadenskraftstufe von 12 erreicht werden. Der Vierkugelapparat-Test (VKA) nach ASTM-D-2266 dient zur Ermittlung von Kennwerten, die hohe Flächenpressungen im Mischreibungsgebiet zwischen relativ zueinander bewegten Oberflächen zulassen sollen. Die Prüfung von Schmierstoffen in der FZG-Zahnrad-Verspannungs-Prüfmaschine nach DIN 51354 T.1 wird angewendet zur Ermittlung der Grenzbeanspruchbarkeit der Schmierstoffe (Auftreten von Fressern und Riefen an den Zahnflanken).
* (Prüfbedingungen: 1 h / 300 N)

### Kurzbeschreibung der Testverfahren

### VKA-Test DIN 51350 - ASTM D 2783 und D 2266

Der Schmierstoff wird in einem Vierkugelapparat geprüft, das aus einer rotierenden Kugel (Laufkugel), die auf drei ihr gleichen Kugeln (Standkugeln) gleitet, besteht. Die Prüfkräfte können entweder stufenweise bis zum Versagen des Vierkugelapparats gesteigert werden oder bei konstanter Prüfkraft werden nach festgelegter Prüfzeit Kalottendurchmesser der drei Standkugeln ausgemessen.

### FZG-Test DIN 51354 - ASTM D 1947

Mit dem zu prüfenden Schmierstoff laufen definierte Zahnräder bei konstanter Drehzahl und festgelegter Anfangs-Schmierstofftemperatur. Die Beanspruchung der Zahnflanken kann stufenweise gesteigert werden. Nach Beendigung des Prüflaufes oder nach jeder Kraftstufe beim Stufentest werden die Veränderungen auf den Zahnflanken (Flankenschäden) durch Beschreibung, Foto, Rauheitsmessungen oder Kontrastabdruck festgehalten. Zusätzlich können die Gewichtsänderungen der Prüfräder bestimmt werden (grevimetrisches Verfahren).

### Beispiel 1

### AW-Additiv für Mineralöle

339 g (1,82 mol) 1-(2-Ethylhexyloxy)-2,3-epoxipropan werden unter Rühren bei 40°C innerhalb von 15 min mit 210,5 g Mono/Dihexylphosphorsäureester (Mol-Verhältnis 1:1) versetzt. Die Reaktion ist stark exotherm. Nach einer Reaktionszeit von 30 min kann das erhaltene Reaktionsprodukt als AW-Additiv eingesetzt werden.

| Prüfergebnisse: | |
|---|---|
| Aussehen: | klare ölige Flüssigkeit |
| P-Gehalt: | 5,6 Gew.-% |
| | 0,5 Gew.-% des Additivs in Solventraffinat ISO VG 46 |
| VKA (1500 rpm) (DIN 51 350 T.2) | |
| Gutlast | 1200 N |
| Freßlast | 1300 N |
| | 0,4 Gew.-% des Additivs in Solventraffinat ISO VG 46 |
| VKA-Dauerlauf (DIN 51350 T.3) | |
| 1 h/300 N | |
| Kalottendurchmesser | 0,45 mm |
| FZG-Test, A8.3/90 (DIN 51354) visuell Schadenskraftstufe | 12 |
| Kupferaktivität (ASTM-D-130) 3 h/100°C | 1 a |
| | Solventraffinat ISO VG 46 + 3 Gew.-% Additiv |
| Feuchtekammer Stahlqualität QQS698 geschmirgelt (DIN 51359) | nach 200 h Korrosionsgrad O (keine Korrosion) |
| | Solventraffinat ISO VG 46 + 0,8 Gew.-% Additiv |
| Korrosionsverhalten gegenüber Stahl (DIN 51585 B) | Korrosionsgrad O (keine Korrosion) |

### Beispiel 2

### AW-Additiv für pflanzliche Öle, Polyglykole und Syntheseester

500 g epoxidierte Rübölsäuremethylester mit einem Epoxidgehalt von 4,9 Gew.-% werden mit 204 g Rüböl unter Rühren vorgelegt. Anschließend gibt man innerhalb von 5 min 150 g Mono-Di-2-ethylhexylphosphorsäureester (Verhältnis 1:1) hinzu. Die Reaktion ist schwach exotherm. Anschließend läßt man noch 5 min nachreagieren. Das erhaltene Reaktionsprodukt kann ohne weitere Aufarbeitung u.a. als AW-Additiv eingesetzt werden.

| Prüfergebnisse | |
|---|---|
| Aussehen: | hellgelbe hochviskose Flüssigkeit |
| P-Gehalt: | 2,34 % |
| | 1 Gew.-% Additiv in Syntheseester |
| VKA-Dauerlauf (DIN 51350, T.3) | |
| 1 h/300 N | |
| Kalottendurchmesser | 0,3 mm |
| FZG-Test A8,3/90 (DIN 51354) visuell Schadenskraftstufe | 12 |
| Kupferaktivität (ASTM-D-130) 3 h/100°C | 1 a |

## Patentansprüche

1. Verfahren zur Phosphorylierung epoxidierter Fettsäuren und Fettsäurederivate, dadurch gekennzeichnet, daß man eine epoxidierte Fettsäure oder deren Derivat, das einen Epoxidgehalt von 1,5 - 15 Gew.-% aufweist, bei 0 bis 120°C mit Mono- und/oder Diestern der Phosphorsäure mit geradkettigen oder verzweigten Alkylgruppen einer Kettenlänge von 4 bis 10 Kohlenstoffatomen oder mit Arylgruppen umsetzt.

2. Verwendung von nach Anspruch 1 hergestellten phoshorylierten epoxidierten Fettsäurederivaten als Schmierstoff-Additive.

## Claims

1. Process for the phosphorylation of epoxidised fatty acids and fatty acid derivatives, characterised in that an epoxidised fatty acid or derivative thereof, having an epoxide content of 1.5 to 15 wt.%, is reacted at 0°C to 120°C with mono- and/or diesters of phosphoric acid having straight-chain or branched alkyl groups with a chain length of 4 to 10 carbon atoms or having aryl groups.

2. Use of phosphorylated epoxidised fatty acid derivatives prepared according to claim 1 as additives for lubricants.

## Revendications

1. Procédé pour la phosphorylation des acides gras et dérivés d'acides gras époxydés, caractérisé en ce que l'on fait réagir un acide gras ou dérivé d'acide gras époxydé à une teneur en époxyde de 1,5 à 15 % en poids, à des températures de 0 à 120°C, avec des mono- et/ou di-esters de l'acide phosphorique à groupes alkyle à chaîne droite ou ramifiée à une longueur de chaîne de 4 à 10 atomes de carbone ou à groupes aryle.

2. Utilisation des dérivés d'acides gras époxydés phosphorylés préparés selon la revendication 1 en tant qu'additifs à des lubrifiants.
